## (19) Europäisches Patentamt

## European Patent Office

## Office européen des brevets

(11) **EP 0 703 569 B1**

## (12) EUROPÄISCHE PATENTSCHRIFT

(45) Veröffentlichungstag und Bekanntmachung des Hinweises auf die Patenterteilung:
**01.03.2000 Patentblatt 2000/09**

(51) Int Cl.⁷: **G10L 15/12**, G10L 19/02

(21) Anmeldenummer: **95202470.1**

(22) Anmeldetag: **12.09.1995**

(54) **System zum Ermitteln von Wörtern aus einem Sprachsignal**

System for finding out words from a speech signal

Dispositif de détection de mots à partir d'un signal vocal

(84) Benannte Vertragsstaaten:
**AT BE CH DE FR GB IT LI NL**

(30) Priorität: **26.10.1994 DE 4438185**
**20.09.1994 DE 4433484**

(43) Veröffentlichungstag der Anmeldung:
**27.03.1996 Patentblatt 1996/13**

(73) Patentinhaber:
• **Philips Corporate Intellectual Property GmbH 52064 Aachen (DE)**
Benannte Vertragsstaaten:
**DE**
• **Koninklijke Philips Electronics N.V. 5621 BA Eindhoven (NL)**
Benannte Vertragsstaaten:
**BE CH FR GB IT LI NL AT**

(72) Erfinder:
• **Dobler, Stefan, c/o Philips Patentverw. GmbH. D-22335 Hamburg (DE)**
• **Rühl, Hans-William, Dr., c/o Philips Patentv. GmbH D-22335 Hamburg (DE)**

(74) Vertreter: **Volmer, Georg, Dipl.-Ing. Philips Corporate Intellectual Property GmbH, Habsburgerallee 11 52064 Aachen (DE)**

(56) Entgegenhaltungen:
**EP-A- 0 399 452          EP-A- 0 418 711**
**EP-A- 0 614 172**

**Beschreibung**

Die Erfindung betrifft ein System zum Ermitteln der Wörter eines vorgegebenen Vokabulars aus einem Sprachsignal mit

- ersten Mitteln zum Aufnehmen des Sprachsignals und zum Abgeben einer Folge von digitalen Testsignalen,
- zweiten Mitteln zum Speichern von Folgen von Referenzsignalen, die den Wörtern des Vokabulars entsprechen,
- dritten Mitteln, die mit den ersten und den zweiten Mitteln gekoppelt sind, zum Vergleichen der Testsignale mit ersten Referenzsignalen zum Erzeugen einer Bewertung für jedes erste Referenzsignal, die von dem Unterschied zwischen dem Testsignal und dem ersten Referenzsignal abhängt, wobei das erste Referenzsignal gleich mit oder in vorgegebener Weise benachbart zu einem zweiten Referenzsignal innerhalb der betreffenden Folge ist, mit dem beim vorhergehenden Testsignal erfolgreich ein Vergleich durchgeführt wurde, und wobei die dritten Mittel eingerichtet sind, um abhängig von dem Abstand zu diesem zweiten Referenzsignal die Bewertung um einen von der Übergangswahrscheinlichkeit abhängigen Übergangswert zu erhöhen,
- vierten Mitteln zum Aufsummieren der erhöhten Bewertungswerte für jede Folge von Referenzsignalen, die mit aufeinanderfolgenden Testsignalen verglichen wurden, und zum Ermitteln einer optimalen Folge mit der kleinsten Summe der erhöhten Bewertungswerte und zum Ausgeben des Wortes bzw. der Wörter, die zu dieser optimalen Folge gehören.

Ein derartiges System ist bekannt aus der DE 32 15 868 C2. Dieses bekannte System dient insbesondere zum Ermitteln von Wortfolgen, wobei für die einzelnen Wörter entsprechende Folgen von Referenzsignalen gespeichert sind und besondere Maßnahmen ergriffen werden, um Wortübergänge zu ermitteln. Die Vergleiche der aufeinanderfolgenden Testsignale mit den Referenzsignalen bzw. deren Ergebnisse können in einem zweidimensionalen Raster dargestellt werden, wobei für jede Folge von Referenzsignalen, mit denen ausgehend von dem Startpunkt im Wort aufeinanderfolgende Testsignale verglichen wurden, bestimmt wird, welches Referenzsignal mit dem folgenden Testsignal die kleinste Summe der Bewertungen ergibt, um einen Pfad im Raster von einem bestimmten Startpunkt in einem Wort bis zum Ende dieses Wortes zu finden. Dazu wird innerhalb des Wortes ein folgendes Testsignal mit den Referenzwerten verglichen, die in einer bestimmten Nachbarschaft zum gerade erreichten Ende des Pfades liegen. Auf diese Weise wird eine nichtlineare Zeitanpassung des tatsächlich gesprochenen Wortes mit der Folge der Referenzwerte dieses Wortes erreicht. Innerhalb eines Wortes werden die verschiedenen Übergänge, d.h. die Nachbarschaft des bei einem Testsignal als optimal gefundenen Referenzwertes zu dem optimalen Referenzwert beim vorhergehenden Testsignal, gleichwertig behandelt.

Aus der DE 37 10 507 A1 ist ein ähnliches System zur Erkennung gesprochener Wörter bekannt, bei dem die unterschiedliche Nachbarschaft der optimalen Referenzsignale für aufeinanderfolgende Testsignale berücksichtigt wird. Dabei werden also die Übergangswahrscheinlichkeiten explizit modelliert. Insbesondere wird abhängig von dieser Nachbarschaft ein fester Übergangswert zur Bewertung addiert. Dabei wird davon ausgegangen, daß die Bewertung durch den negativen Logarithmus der Wahrscheinlichkeit, daß das tatsächlich gesprochene Wort an dieser Stelle dem betreffenden Referenzsignal entspricht, gebildet wird.

Durch entsprechende Wahl der Übergangswerte kann ein diagonaler Verlauf des Pfades bevorzugt werden, da dieser am wahrscheinlichsten ist, denn dann entspricht die Geschwindigkeit, mit der ein Wort gesprochen wird, der Folge der Referenzsignale. Auf diese Weise können Wörter auch bei unterschiedlicher Sprechweise erkannt werden, jedoch mit unterschiedlicher Bewertung. Durch die Wahl der Übergangswerte wird also die Sprechgeschwindigkeit modelliert.

Die Referenzwerte werden anhand von Testsätzen ermittelt, die vor der eigentlichen Benutzung des Systems gesprochen werden müssen. Wenn das System für einen bestimmten Benutzer beabsichtigt ist, werden die Testsätze nur von diesem Benutzer aufgenommen. Damit ist dann auch gleichzeitig dessen Sprechgeschwindigkeit modelliert. Wenn das System jedoch mehreren Benutzern dienen soll bzw. im Idealfall ganz sprecherunabhängig sein soll, können die Referenzwerte aus Testsätzen einer Anzahl verschiedener Sprecher gewonnen werden. Sowohl für die Referenzwerte selbst als auch für die Übergangswerte werden dabei dann Mittelwerte bestimmt, wobei die letzteren für alle Stellen innerhalb aller Wörter als gleich angenommen werden. Dies ergibt jedoch eine geringere Zuverlässigkeit bei der Erkennung, denn wenn ein Benutzer beispielsweise sehr schnell spricht, so daß der optimale Pfad der Referenzsignale durch das Wort steiler als die Diagonale verläuft, ergibt sich durch die Übergangswerte insgesamt ein ungünstiger Bewertungswert, und das gesprochene Wort kann leichter mit ähnlich klingenden Referenzwörtern verwechselt werden.

Aus EP-A-0 399 452 und EP-A-0 614 172 sind weitere Systeme zum Ermitteln von Wörtern bekannt, welche mittels der dynamischen Programmierung Folgen von Testsignalen mit Folgen von Referenzsignalen vergleichen.

Aufgabe der Erfindung ist es, ein System der eingangs genannten Art anzugeben, das bei Benutzung durch verschiedene Sprecher eine verbesserte Zuverlässigkeit aufweist.

Diese Aufgabe wird erfindungsgemäß dadurch gelöst, daß fünfte Mittel vorgesehen sind zum Verändern der Übergangswerte in neue Übergangswerte für nachfolgende Vergleiche in Abhängigkeit von der Abweichung der Länge des Sprachsignals, von dem die mit der optimalen Folge von Referenzwerten verglichenen Testsignale abgeleitet sind, von der Länge der optimalen Folge von Referenzsignalen.

Bei dem erfindungsgemäßen System wird also durch Anpassung der Übergangswerte die Folge von Referenzsignalen an die Sprechgeschwindigkeit des momentanen Benutzers angepaßt. Sobald ein Wort erkannt und ggf. bestätigt worden ist, kann die Anpassung der Übergangswerte erfolgen, so daß folgende Wörter zuverlässiger erkannt werden.

Eine gute Möglichkeit, die Übergangswerte anzupassen, besteht nach einer Ausgestaltung der Erfindung darin, daß die fünften Mittel eingerichtet sind, um abhängig von dem Verhältnis

$$n = \frac{T}{N}$$

mit T gleich der Länge der Folge von Testsignalen und N gleich der Länge der Folge von Referenzsignalen die Übergangswerte a wie folgt in neue Übergangswerte a' zu ändern:,

$$a'_{i,i} = a_{i,i} - (n-1)b$$

$$a'_{i,i+1} = a_{i,i+1}$$

$$a'_{i,i+2} = a_{i,i+2} + (n-1)b,$$

wobei der Index i,i bedeutet, daß das erste Referenzsignal gleich dem zweiten Referenzsignal ist, der Index i, i+1 bedeutet, daß das erste und das zweite Referenzsignal unmittelbar benachbart sind, der Index i,i+2 bedeutet, daß das erste und das zweite Referenzsignal durch ein weiteres Referenzsignal getrennt sind, und b einen festgelegten Proportionalitätsfaktor bedeutet.

Es wird also das Verhältnis der Länge des tatsächlich gesprochenen Worts zu der Länge der Folge der Referenzsignale verwendet, um die Übergangswerte derart zu verändern, daß die gesamte Übergangswahrscheinlichkeit für alle Übergänge konstant bleibt, indem die eine Abweichung von der Diagonalen um das gleiche Maß bevorzugt wird, um die die andere Abweichung von der Diagonalen benachteiligt wird.

Diese Berücksichtigung der tatsächlichen Sprechgeschwindigkeit des aktuellen Benutzers des Systems verbessert die Zuverlässigkeit der Erkennung erheblich.

Eine weitere Verbesserung ist dadurch möglich, wenn nach einer Ausgestaltung der Erfindung zusätzlich noch sechste Mittel vorgesehen sind zum Ändern der Referenzwerte $r_i$ in neue Referenzwerte $r'_i$ in folgender Weise:

$$r'_i = r_i(1-c) + c \cdot y_t$$

wobei $y_t$ das Testsignal ist, das in der optimalen Folge von Referenzwerten mit dem Referenzwert $r_i$ verglichen wurde, und c ein vorbestimmter Wert ist. Dadurch wird also nicht nur die Sprechgeschwindigkeit, sondern auch der Tonfall, d.h. der Vokaltrakt des Sprechers, berücksichtigt. Diese Anpassung der Referenzwerte an einen aktuellen Sprecher ist grundsätzlich bekannt, jedoch nicht in Verbindung mit der Anpassung an die Sprechgeschwindigkeit.

Die Anpassung an die Sprechgeschwindigkeit und ggf. die Aussprache des momentanen Sprechers sollte zurückhaltend erfolgen, damit sie nicht an zufällige Extremwerte der Sprechweise des momentanen Sprechers bei einem einzelnen Wort oder sehr wenigen Wörtern erfolgt, während derselbe Sprecher anschließend seine Sprechweise verändert. Das Ausmaß der Anpassung kann bei der Sprechgeschwindigkeit durch den Proportionalitätsfaktor b und ggf. bei der Änderung der Referenzwerte selbst durch den vorbestimmten Wert c erfolgen; diese beiden Werte sollten nicht zu groß gewählt werden. Damit aber dennoch eine gute Anpassung an die Sprechweise des momentanen Sprechers erfolgen kann, ist es nach einer weiteren Ausgestaltung der Erfindung zweckmäßig, daß wenigstens die Änderung der Referenzwerte in demselben Sprachsignal mehrmals erfolgt. Dadurch wird nach mehreren erkannten Wörtern eine schrittweise Anpassung an die Sprechweise des momentanen Sprechers erreicht.

Ausführungsbeispiele der Erfindung werden nachstehend anhand der Zeichnung näher erläutert. Es zeigen

Fig. 1      ein schematisches Blockschaltbild des erfindungsgemäßen Systems,

Fig. 2      ein Diagramm zur Erläuterung der Bildung von Pfaden durch aufeinanderfolgende Wörter,

Fig. 3      ein Diagramm zur Erläuterung der Übergänge bei zwei aufeinanderfolgenden Testsignalen.

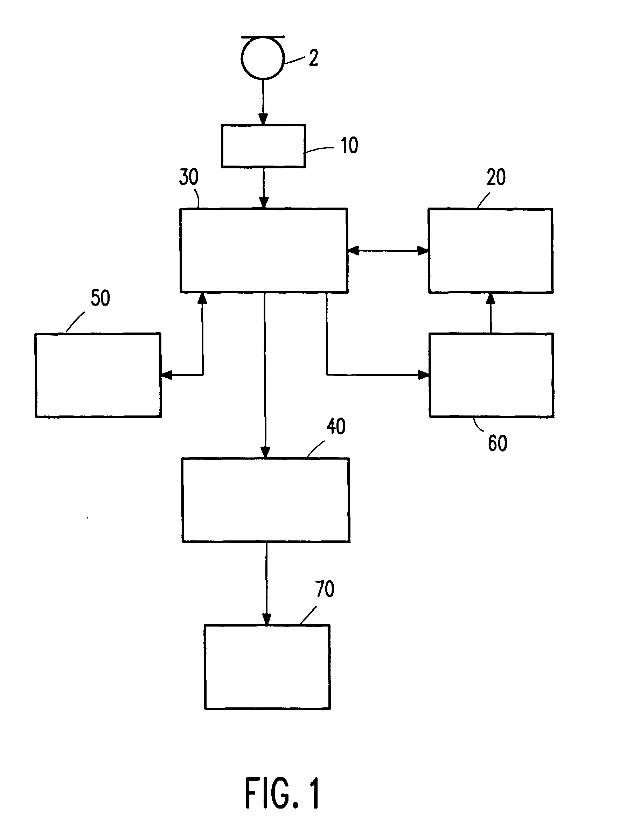

In dem Blockschaltbild in Fig. 1 dient ein Mikrofon 2 dazu, ein von einem Sprecher gesprochenes akustisches Signal in ein elektrisches Signal umzusetzen. Dieses Signal wird dann in dem Block 10 weiterverarbeitet, indem es digitalisiert wird und beispielsweise die einzelnen Frequenzanteile des Sprachsignals abschnittsweise bestimmt werden. Die Länge solcher Abschnitte ist beispielsweise ein einheitlicher Wert zwischen 10 ms und 20 ms. Vom Block 10 werden schließlich die Testsignale an den Block 30 abgegeben.

In Block 30 werden die Testsignale mit Referenzsignalen vergleichen, die aus einem Speicher 20 zugeführt werden, der von dem Block 30 angesteuert bzw. adressiert wird. Diese Referenzsignale sind vorher durch Analyse von Testsätzen, die vorzugsweise von mehreren verschiedenen Sprechern gesprochen wurden, ermittelt worden. Durch die Vergleiche werden Bewertungen ermittelt, die um Übergangswerte, die im Block 30 gespeichert sind, erhöht werden. Diese erhöhten Bewertungen werden im Block 40 über verschiedene Pfade durch unterschiedliche Wörter aufsummiert. Diese Aufsummierung kann jedoch auch gleich bei den Vergleichen für die Ermittlung der Bewertungen erfolgen. Am Ende eines Wortes bzw. am Ende eines Sprachsignals, das auch mehrere Wörter umfassen kann, wird im Block 40 der optimale Gesamtpfad ermittelt und die entsprechende Wortfolge an dem Block 70 ausgegeben. Dies kann beispielsweise ein Bildschirm sein, vorzugsweise ist dies jedoch eine Anordnung, das durch Sprachkommandos gesteuert werden soll.

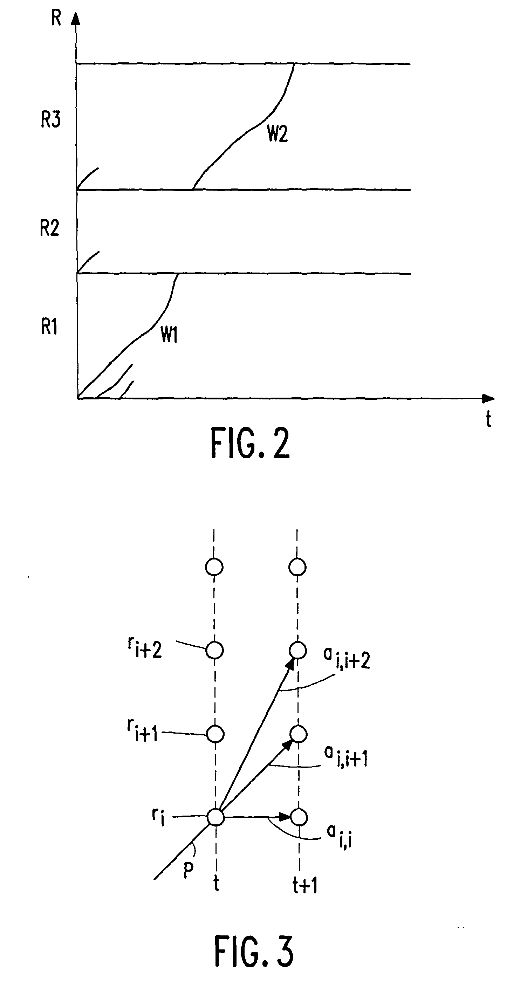

Die Durchführung der Vergleiche aufeinanderfolgender Testsignale mit Referenzsignalen verschiedener Wörter und die Bestimmung der optimalen Folge soll näher anhand der Fig. 2 erläutert werden. Die Zeitachse t gibt die Folge der Testsignale an, die aus dem empfangenen Sprachsignal ermittelt wurde, während die Achse R die Folge von Referenzsignalen für mehrere Wörter darstellt, die hier der Übersichtlichkeit halber übereinander angeordnet sind. Aus Fig. 2 ist zu erkennen, daß die ersten Testsignale die beste Übereinstimmung mit der Folge R1 von Referenzsignalen zeigen, die einem Wort W1 zugeordnet ist. Es werden stets auch Vergleiche mit den Anfängen anderer Folgen R2 und R3 begonnen, die anderen Wörtern zugeordnet sind, jedoch wird hier angenommen, daß die Ähnlichkeit so gering ist, daß diese Folgen von Vergleichen bald abgebrochen werden. Entsprechend beginnen allgemein auch mit den folgenden Testsignalen erneut Vergleiche mit beispielsweise der Folge R1 von Testsignalen, die jedoch ebenfalls bald abgebrochen werden, da die später gesprochenen Teile des Sprachsignals zu verschieden sind vom Anfang der Folge R1 von Referenzsignalen.

Nach Beendigung des Pfades durch die Folge R1 von Referenzsignalen, wobei dieser Pfad also einem Wort W1 entspricht, werden die Vergleiche mit den Anfängen der Folgen R1 bis R3 von Referenzsignalen fortgesetzt, und in diesem Beispiel wird angenommen, daß der nun beginnende Pfad durch die Folge R3 von Referenzsignalen den optimalen Pfad bzw. Teilpfad ergibt, so daß als nächstes ein Wort W3 als erkannt ausgegeben wird. In ähnlicher Weise setzen sich die Vergleiche fort, wenn das Sprachsignal noch länger andauert, weil noch mehr Wörter gesprochen werden.

Die Vorgänge bei der Durchführung der Vergleiche innerhalb eines Wortes werden anhand der Fig. 3 näher erläutert, die einen kleinen Ausschnitt aus der Fig. 2 darstellt, nämlich nur für zwei aufeinanderfolgende Testsignale zu den Zeitpunkten t und t+1 zusammen mit einigen Referenzsignalen $r_i$, $r_{i+1}$, $r_{i+2}$ usw. Es wird angenommen, daß mit dem Testsignal zum Zeitpunkt t der optimale Pfad P vorläufig beim Referenzwert $r_i$ geendet hat. Das nächste Testsignal zum Zeitpunkt t+1 wird dann mit den Referenzsignalen $r_i$, $r_{i+1}$ und $r_{i+2}$ verglichen entsprechend den zugelassenen Übergängen $a_{i,i}$, $a_{i,i+1}$ und $a_{i,i+2}$, denen gleich bezeichnete Übergangswerte zugeordnet sind. Diese Übergangswerte entsprechen im beschriebenen Beispiel dem negativen Logarithmus der Übergangswahrscheinlichkeiten. Der Vergleich des Testsignals zum Zeitpunkt t+1 mit dem Referenzsignal $r_i$ ergibt eine vom Unterschied zwischen beiden Signalen abhängige Bewertung, die um den Übergangswert $a_{i,i}$ erhöht wird. Entsprechend gibt der Vergleich dieses Testsignals mit dem Referenzsignal $r_{i+1}$ eine Bewertung, die um den Übergangswert $a_{i,i+1}$ erhöht wird. In gleicher Weise ergibt der Vergleich dieses Testsignals mit dem Referenzsignal $r_{i+2}$ eine Bewertung, die um den Übergangswert $a_{i,i+2}$ erhöht wird. Die Übergangswerte $a_{i,i}$ und $a_{i,i+2}$ sind beispielsweise gleich oder nur wenig unterschiedlich, während der Übergangswert $a_{i,i+1}$ merklich kleiner ist. Wenn das Testsignal zum Zeitpunkt t+1 zu allen drei dargestellten Referenzsignalen etwa den gleichen Unterschied aufweist, was durchaus möglich ist, da benachbarte Referenzwerte häufig ähnlich sind, wird also beim Vergleich mit dem Referenzwert $r_{i+1}$ die kleinste um den Übergangswert erhöhte Bewertung auftreten, so daß der im Referenzwert $r_i$ geendete Pfad P diagonal fortgesetzt wird. Diese diagonale Richtung ist also bevorzugt.

Bei einem schnell sprechenden Sprecher würde das Testsignal zum Zeitpunkt t+1 ähnlicher dem Referenzwert $r_{i+2}$ sein. Wenn jedoch der Übergangswert $a_{i,i+2}$ zuviel größer ist als der Übergangswert $a_{i,i+1}$, könnte dann jedoch fälschlich doch die diagonale Richtung erzwungen werden. Wenn dies im Wort, d.h. in der Folge der Referenzsignale mehrmals auftritt, ergibt sich am Ende eine ungünstigere Summe der Bewertungen, als der abgesehen von der zu schnellen Sprechweise im übrigen guten Ähnlichkeit zwischen der Folge der Testsignale und der Folge der Referenzsignale entspricht. Dies führt zu einer unzuverlässigeren Erkennung insgesamt. Es ist also zweckmäßig, sobald erkannt ist, daß der Sprecher in einem bestimmten Ausmaß zu schnell oder zu langsam spricht, die Übergangswerte zu verändern, um eine Richtung entsprechend abweichend von der Diagonalen eher zu bevorzugen.

Diese Anpassung erfolgt in Block 50 in Fig. 1 auf folgende Weise.

Wenn ein Wort oder auch eine kurze Wortfolge erkannt worden ist, d.h. es ist in wenigstens einer Folge von Referenzsignalen ein bis zum Ende dieser Folge führender Pfad ermittelt worden, steht dann also fest, wie viele Testsignale dafür notwendig waren. Da die Anzahl der Referenzsignale dieser Folge gegeben ist, kann nun das Verhältnis n berechnet werden

$$n = \frac{T}{N}$$

Dabei gibt T die Anzahl der Testsignale an, mit denen das Wort erkannt wurde, und N gibt die Anzahl der Referenzsignale in der betreffenden Folge an. Mit diesem Verhältnis n werden aus denen vorhandenen Übergangswerten a nun neue Übergangswerte a' bestimmt:

$$a'_{i,i} = a_{i,i} - (n-1)b$$

$$a'_{i,i+1} = a_{i,i+1}$$

$$a'_{i,i+2} = a_{i,i+2} + (n-1)b,$$

Der Proportionalitätsfaktor b bestimmt dabei, in welchem Maße die Anpassung der Übergangswerte an die Sprechweise des Sprechers erfolgt. Damit diese Anpassung nicht zu stark von zufälligen Extremwerten in der Sprechweise des sprechers abhängt, sollte der Wert b nicht zu groß gewählt werden. Ein Wert b = 180 hat sich als guter Kompromiß herausgestellt, wenn die Übrgangswerte a, wie bereits erwähnt, durch den negativen Logarithmus der Übergangswahrscheinlichkeiten dargestellt sind. Unabhängig von diesem Wert wird der Übergangswert für die Diagonale also konstant gehalten, während der steilere Übergangswert $a_{i,i+2}$ bei schneller Sprechweise um das gleiche Ausmaß verkleinert wird, wie der Übergangswert für den flacheren Übergang $a_{i,i}$ vergrößert wird. Dadurch wird insgesamt ein steilerer Übergang zwischen den Referenzsignalen für aufeinanderfolgende Testsignale bevorzugt. Entsprechendes gilt für eine langsame Sprechweise. Die neuen Übergangswerte werden nun zum Block 30 übertragen und dort für die folgenden Vergleiche verwendet.

Eine weitere Verbesserung der Zuverlässigkeit der Erkennung kann erreicht werden, wenn zusätzlich die Referenzsignale selbst an die Aussprache des Sprechers angepaßt werden. Dies erfolgt in Block 60 in Fig. 1 auf folgende Weise.

Nachdem wie vorher beschrieben ein Wort erkannt worden ist, werden die Testsignale nochmals verglichen, nun jedoch nur mit der Folge von Referenzsignalen, in der vorher der der optimale Pfad gefunden wurde, und jedes Referenzsignal $r_i$ wird auf folgende Weise in ein angepaßtes Referenzsignal $r'_i$ umgewandelt:

$$r'_i = r_i(1-c) + c \cdot y_t$$

Darin ist $y_t$ das Testsignal, das zum Zeitpunkt t mit dem Referenzsignal $r_i$ verglichen wurde, während der Faktor c angibt, in welchem Ausmaße das bisherige Referenzsignal geändert wurde. Ein Wert von c=0,13 wurde als zweckmäßig festgestellt, insbesondere dann, wenn die Referenzsignale in mehreren Schritten mit aufeinanderfolgenden Wörtern angepaßt werden.

Bisher wurde davon ausgegangen, daß eine Folge von Referenzsignalen jeweils ein Wort darstellt. Es sind jedoch auch Systeme zur Spracherkennung bekannt, bei denen die einzelnen Folgen von Referenzsignalen Phoneme darstellen, die in vielen Wörtern gleich sein können. Aus den erkannten Phonemen werden dann Wörter gebildet. Auch für solche Systeme ist das vorstehend beschriebene Verfahren zur Anpassung der Übergangswerte und gegebenenfalls der Referenzsignale anwendbar.

Weiterhin ist das Verfahren auch anwendbar, wenn die Übergangswerte nicht wie im genannten Ausführungsbeispiel für alle Referenzsignale gleich, sondern abhängig von der Stelle des Referenzsignals innerhalb der Folge unterschiedlich sind. Der Anpassungsfaktor b muß dabei gegebenenfalls stellenabhängig bestimmt werden.

**Patentansprüche**

1. System zum Ermitteln von Wörtern eines vorgegebenen Vokabulars aus einem Sprachsignal mit

   - ersten Mitteln zum Aufnehmen des Sprachsignals und zum Abgeben einer Folge von digitalen Testsignalen,
   - zweiten Mitteln zum Speichern von Folgen von Referenzsignalen, die den Wörtern des Vokabulars entsprechen,
   - dritten Mitteln, die mit den ersten und den zweiten Mitteln gekoppelt sind, zum Vergleichen der Testsignale mit ersten Referenzsignalen zum Erzeugen einer Bewertung für jedes erste Referenzsignal, die von dem Unterschied zwischen dem Testsignal und dem ersten Referenzsignal abhängt, wobei das erste Referenzsignal gleich mit oder in vorgegebener Weise benachbart zu einem zweiten Referenzsignal innerhalb der betreffenden Folge ist, mit dem beim vorhergehenden Testsignal erfolgreich ein Vergleich durchgeführt wurde, und wobei die dritten Mittel eingerichtet sind, um abhängig von dem Abstand zu diesem zweiten Referenzsignal die Bewertung um einen von der Übergangswahrscheinlichkeit abhängigen Übergangswert zu erhöhen,
   - vierten Mitteln zum Aufsummieren der erhöhten Bewertungswerte für jede Folge von Referenzsignalen, die mit aufeinanderfolgenden Testsignalen verglichen wurden, und zum Ermitteln einer optimalen Folge mit der kleinsten Summe der erhöhten Bewertungswerte und zum Ausgeben des Wortes bzw. der Wörter, die zu dieser optimalen Folge gehören,

   gekennzeichnet durch fünfte Mittel zum Verändern der Übergangswerte in neue Übergangswerte für nachfolgende Vergleiche in Abhängigkeit von der Abweichung der Länge des Sprachsignals, von dem die mit der optimalen Folge von Referenzwerten verglichenen Testsignale abgeleitet sind, von der Länge der optimalen Folge von Referenzsignalen.

**2.** System nach Anspruch 1,
dadurch <u>gekennzeichnet,</u> daß die fünften Mittel eingerichtet sind, um abhängig von dem Verhältnis

$$n = \frac{T}{N}$$

mit T gleich der Länge der Folge von Testsignalen und N gleich der Länge der Folge von Referenzsignalen die Übergangswerte a wie folgt in neue Übergangswerte a' ändert:,

$$a'_{i,i} = a_{i,i} - (n-1)b$$

$$a'_{i,i+1} = a_{i,i+1}$$

$$a'_{i,i+2} = a_{i,i+2} + (n-1)b,$$

wobei der Index i,i bedeutet, daß das erste Referenzsignal gleich dem zweiten Referenzsignal ist, der Index i,i+1 bedeutet, daß das erste und das zweite Referenzsignal unmittelbar benachbart sind, der Index i,i+2 bedeutet, daß das erste und das zweite Referenzsignal durch ein weiteres Referenzsignal getrennt sind, und b einen festgelegten Proportionalitätsfaktor bedeutet.

**3.** System nach Anspruch 1 oder 2,
<u>gekennzeichnet</u> <u>durch</u> sechste Mittel zum Ändern der Referenzwerte $r_i$ in neue Referenzwerte $r'_i$ für nachfolgende Vergleiche in folgender Weise:

$$r'_i = r_i (1-c) + c \cdot y_t$$

wobei $y_t$ das Testsignal ist, das in der optimalen Folge von Referenzwerten mit dem Referenzwert $r_i$ verglichen wurde, und c ein vorbestimmter Wert ist.

**4.** System nach Anspruch 3,
dadurch <u>gekennzeichnet,</u> daß wenigstens die Änderung der Referenzwerte in demselben Sprachsignal mehrmals wiederholt erfolgt.

**Claims**

**1.** A system for determining words of a predetermined vocabulary from a speech signal, including

- first means for picking up the speech signal and for supplying a sequence of digital test signals,
- second means for storing sequences of reference signals which correspond to the words of the vocabulary,
- third means which are coupled to the first and the second means in order to compare the test signals with first reference signals so as to form for each first reference signal a score which is dependent on the difference between the test signal and the first reference signal, the first reference signal being identical to or a neighbour, in a predetermined manner, of a second reference signal within the relevant sequence with which a comparison has been successfully performed for the preceding test signal, the third means being arranged to increment, in dependence on the distance from said second reference signal, the score by a transition value which is dependent on the probability of transition,
- fourth means for summing the incremented scores for each sequence of reference signals compared with successive test signals, and for determining an optimum sequence having the smallest sum of the incremented scores and for outputting the word or the words associated with said optimum sequence,

<u>characterized in that</u> there are provided fifth means for changing the transition values into new transition values for subsequent comparisons in dependence on the deviation between the length of the speech signal wherefrom the test signals compared with the optimum sequence of reference signals are derived and the length of the optimum sequence of reference signals.

**2.** A system as claimed in Claim 1,
<u>characterized in that</u> the fifth means are arranged to change the transition values a, in dependence on the ratio

$$n = \frac{T}{N}$$

where T is the length of sequence of test signals and N is the length of the sequence of reference signals, into new transition values a' as follows:

$$a'_{i,i} = a_{i,i} - (n-1)b$$

$$a'_{i,i+1} = a_{i,i+1}$$

$$a'_{i,i+2} = a_{i,i+2} + (n-1)b,$$

in which the index i,i means that the first reference signal equals the second reference signal, the index i,i+1 means that the first and the second reference signals are direct neighbours, the index i,i+2 means that the first and the second reference signals are separated by a further reference signal, and b means a predetermined proportionality factor.

3. A system as claimed in Claim 1 or 2, <u>characterized in that</u> there are provided sixth means for changing the reference values $r_i$ into new reference values $r'_i$ for subsequent comparisons as follows:

$$r'_i = r_i(1-c)+c.y_t$$

where $y_t$ is the test signal compared with the reference value $r_i$ in the optimum sequence of reference values, and c is a predetermined value.

4. A system as claimed in Claim 3, <u>characterized in that</u> at least the changing of the reference values within the same speech signal is performed several times.

**Revendications**

1. Système de détermination de mots d'un vocabulaire préalablement déterminé à partir d'un signal vocal avec

   - des premiers moyens en vue d'enregistrer un signal vocal et délivrer une séquence de signaux de test numériques;
   - des deuxièmes moyens en vue d'enregistrer des séquences de signaux de référence qui correspondent aux mots du vocabulaire,
   - des troisièmes moyens qui sont couplés aux premiers et deuxièmes moyens en vue de la comparaison des signaux de test avec les premiers signaux de référence pour la production d'une évaluation pour chaque premier signal de référence qui dépend de la différence entre le signal de test et le premier signal de référence, le premier signal de référence étant égal ou proche de manière déterminée d'un deuxième signal de référence au sein d'une séquence correspondante avec laquelle une comparaison a été effectuée avec succès pour le signal de test précédent et les troisièmes moyens étant conçus pour augmenter, en fonction de l'intervalle avec ce deuxième signal de référence, l'évaluation d'une valeur transitoire dépendant de la probabilité de la transition,
   - des quatrièmes moyens en vue d'additionner les valeurs d'évaluation majorées pour chaque séquence de signaux de référence qui ont été comparés avec des signaux de test successifs et en vue de déterminer une séquence optimale avec la somme minimale des valeurs d'évaluation majorées et de délivrer le ou les mots qui font partie de cette séquence optimale, système de détermination des mots d'un vocabulaire préalablement déterminé à partir d'un signal de parole

<u>caractérisé par</u> des cinquièmes moyens en vue de transformer les valeurs de transition en nouvelles valeurs de transition pour des comparaisons consécutives en fonction de l'écart de la longueur du signal de parole dont sont dérivés les signaux de test comparés à la séquence optimale des valeurs de référence par rapport à la longueur de la séquence optimale de signaux de référence.

2. Système selon la revendication 1, <u>caractérisé en ce que</u> les cinquièmes moyens sont constitués pour que les valeurs de transition a soient transformées comme suit en nouvelles valeurs de transition a' en fonction du rapport

$$n = \frac{T}{N}$$

T étant égal à la longueur de la séquence des signaux de test et N à la longueur de la séquence de signaux de référence:

$$a'_{i,i} = a_{i,i} - (n-1)b$$

$$a'_{i,i+1} = a_{i,i+1}$$

$$a'_{i,i+2} = a_{i,i+2} + (n-1)b,$$

l'indice i, i signifiant que le premier signal de référence est égal au deuxième signal de référence , l'indice i, i + 1 signifie que les premier et deuxième signaux de référence sont directement voisins, l'indice i, i + 2 signifiant que les premier et deuxième signaux de référence sont séparés par un autre signal de référence et b désigne un facteur de proportionnalité défini.

3. Système selon l'une des revendications 1 et 2, <u>caractérisé par</u> des sixièmes moyens en vue de la modification des valeurs de référence $r_i$ en nouvelles valeurs de référence $r'_i$ pour les comparaisons consécutives de la manière suivante :

$$r'_i = r_i (1-c) + c. y_t,$$

$y_t$ étant le signal de test qui a été comparé dans la séquence optimale de valeurs de référence avec la valeur de référence $r_i$ et c une valeur préalablement déterminée.

4. Système selon la revendication 3,
   <u>caractérisé en ce</u> que la modification des valeurs de référence au moins se répète à plusieurs reprises dans le même signal de parole.

FIG. 1

FIG. 2

FIG. 3